(19) **Europäisches Patentamt** / **European Patent Office** / **Office européen des brevets**

(11) **EP 3 944 215 B1**

(12) **EUROPEAN PATENT SPECIFICATION**

(45) Date of publication and mention
of the grant of the patent:
**17.04.2024 Bulletin 2024/16**

(21) Application number: **20772550.8**

(22) Date of filing: **21.02.2020**

(51) International Patent Classification (IPC):
*G01C 21/00* (2006.01)   *G01C 21/26* (2006.01)
*G01C 21/36* (2006.01)   *G06T 7/62* (2017.01)
*G06T 11/60* (2006.01)   *G08G 1/01* (2006.01)
*G08G 1/04* (2006.01)   *G08G 1/0969* (2006.01)

(52) Cooperative Patent Classification (CPC):
**G01C 21/3667; G01C 21/3697; G01C 21/3815;
G01C 21/3867; G06T 7/62; G08G 1/0112;
G08G 1/04;** G01C 21/3826; G06T 2207/20021;
G06T 2207/20072; G06T 2207/30184

(86) International application number:
**PCT/JP2020/007106**

(87) International publication number:
**WO 2020/189181 (24.09.2020 Gazette 2020/39)**

(54) **INFORMATION PROCESSING DEVICE, METHOD, AND PROGRAM**

INFORMATIONSVERARBEITUNGSVORRICHTUNG, -VERFAHREN UND -PROGRAMM

DISPOSITIF, PROCÉDÉ ET PROGRAMME DE TRAITEMENT D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2019 JP 2019050686**

(43) Date of publication of application:
**26.01.2022 Bulletin 2022/04**

(73) Proprietor: **NIPPON TELEGRAPH AND
TELEPHONE CORPORATION
Chiyoda-ku, Tokyo 100-8116, (JP)**

(72) Inventors:
• **MORI, Kouhei
Musashino-shi, Tokyo 180-8585 (JP)**
• **YOSHIDA, Manabu
Musashino-shi, Tokyo 180-8585 (JP)**
• **MAEDA, Atsuhiko
Musashino-shi, Tokyo 180-8585 (JP)**
• **SHAKE, Ippei
Musashino-shi, Tokyo 180-8585 (JP)**

(74) Representative: **Nederlandsch Octrooibureau
P.O. Box 29720
2502 LS The Hague (NL)**

(56) References cited:
CN-A- 108 645 342        JP-A- 2001 084 357
JP-A- 2001 305 953       JP-A- 2002 148 064
JP-A- 2007 004 655       JP-A- 2008 164 373
JP-A- 2009 230 518       JP-A- 2018 055 535
US-A1- 2014 244 161      US-A1- 2015 120 244

• HOULE M E ET AL: "Computing the width of a
set", IEEE TRANSACTIONS ON PATTERN
ANALYSIS AND MACHINE INTELLIGENCE, IEEE
COMPUTER SOCIETY, USA, vol. 10, no. 5, 1
September 1988 (1988-09-01), pages 761-765,
XP011478194, ISSN: 0162-8828, DOI:
10.1109/34.6790

**Description**

Embodiments of the present invention relates to an information processing apparatus, a method, and a program.

BACKGROUND

In recent years, there has been an active development of technologies such as vehicle safety driving support or car navigation. For these technologies, it is important to provide width information of an object, which indicates whether there is a road has a width which allows a vehicle to move, whether a road has a width which allows a vehicle to pass another vehicle parked on the road, and the like.

Conventionally, there is a method of calculating the width of a road using road centerline vector data and block line vector data (see patent literature 1, for example).

Furthermore, CN 108 645 342 A discloses a road width extraction method based on road trajectory data and high resolution images.

CITATION LIST

PATENT LITERATURE

Patent literature 1: Jpn. Pat. Appln. KOKAI Publication No. 2001-084357

SUMMARY

TECHNICAL PROBLEM

However, the technology disclosed in patent literature 1 requires road center line data to calculate the width of a road. Though the technology makes it possible to calculate the width of a road, it has the problem that a roadway width necessary for the navigation of automobiles or pedestrians and a sidewalk width which allows pedestrians to pass cannot be calculated individually.

This invention has been made in consideration of the above situation and its object is to provide an information processing apparatus, a method, and a program capable of obtaining information suitable to calculate the width of an object without using data of the center line of the object.

SOLUTION TO PROBLEM

To attain the above object, according to one aspect of the present invention, an information processing apparatus according to claim 1 is provided.

According to one aspect of the present invention, an information processing method according to claim 5 is provided.

ADVANTAGEOUS EFFECTS

According to each aspect of the present invention, information suitable to calculate the width of an object can be obtained without using data of the center line of the object.

BRIEF DESCRIPTION OF THE DRAWINGS

FIG. 1 is a block diagram showing a functional configuration of a width calculation system including a width calculation apparatus according to an embodiment of the present invention.
FIG. 2 is a flowchart showing an example of a procedure for the entire width calculation process to be performed by the width calculation apparatus according to the embodiment of the present invention.
FIG. 3 is a flowchart showing an example of a procedure for terrain data processing to be performed by the width calculation apparatus according to the embodiment of the present invention.
FIG. 4 is a flowchart showing an example of a procedure for a width calculation process to be performed by the width calculation apparatus according to the embodiment of the present invention.
FIG. 5 is a flowchart showing an example of a procedure for a width output control process to be performed by the width calculation apparatus according to the embodiment of the present invention.

FIG. 6 is a plan view showing an example of each section of a road.

FIG. 7 is an illustration of an example of an image of a road section.

FIG. 8 is a diagram showing an example of a terrain data image of the road section.

FIG. 9 is a diagram showing an example of a terrain data image of a sidewalk section.

FIG. 10 is a diagram showing a first example of width calculation.

FIG. 11 is a diagram showing a second example of the width calculation.

FIG. 12 is a diagram showing a second example of the width calculation.

FIG. 13 is a diagram showing a third example of the width calculation.

FIG. 14 is a diagram showing a fourth example of the width calculation.

FIG. 15 is a diagram illustrating an example of calculation of the width of a road section.

FIG. 16 is a diagram illustrating an example of calculation of the width of a sidewalk section.

FIG. 17 is an illustration of an example of output of width information.

FIG. 18 is a diagram illustrating a first example of an exceptional process.

FIG. 19 is a diagram illustrating a second example of the exceptional process.

FIG. 20 is a diagram illustrating a third example of the exceptional process.

FIG. 21 is a diagram illustrating a fourth example of the exceptional process.

FIG. 22 is a diagram illustrating a fifth example of the exceptional process.

FIG. 23 is a block diagram showing an example of a hardware configuration of the width calculation apparatus according to the embodiment of the present invention.

DETAILED DESCRIPTION

An embodiment of the present invention will be described below with reference to the drawings.

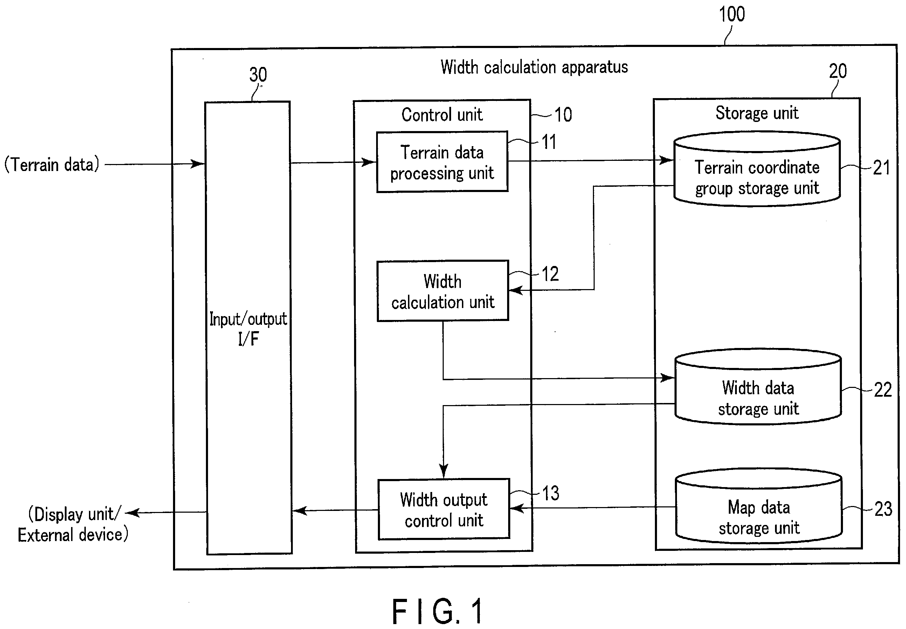

FIG. 1 is a block diagram schematically showing a configuration of a width calculation system including a width calculation apparatus that is an information processing apparatus according to an embodiment of the present invention.

Terrain data is, for example, polygon data and polylines constituting a map service. The terrain data is created as layer data in which the positions and shapes of objects such as roads, tunnels, sidewalks, rivers, railroads and buildings, which are present on a map, are represented by nodes and links.

Note that the terrain data may be created from aerial photographs. The terrain data is not limited to the aerial photographs, but may be created from information measured by vehicles equipped with a camera and various sensors. Alternatively, map data created virtually for computer games and the like can also be used as terrain data.

The width calculation apparatus 100 shown in FIG. 1 is a apparatus that calculates the widths of roads, sidewalks and the like based on terrain data, and is configured as described below.

The width calculation apparatus 100 is configured by, for example, a personal computer, and includes a control unit 10, a storage unit 20 and an input/output interface unit (referred to as an input/output I/F hereinafter) 30.

The input/output I/F 30 supplies terrain data to the control unit 10. The input/output I/F 30 also generates display data and outputs the display data to a display unit, an external device or the like, which displays a screen, etc. by, for example, a file and a map application program, to display a width calculation result.

The storage unit 20 includes a nonvolatile memory, such as a hard disk drive (HDD), a solid state drive (SSD), to and from which data can be written and read as needed, a read only memory (ROM) used as a program memory, and the like, as storage media, and also includes a terrain coordinate group storage unit (terrain coordinate group data storage unit) 21, a width data storage unit 22 and a map data storage unit 23.

The terrain coordinate group storage unit 21 is used to store terrain coordinate group data calculated by a terrain data processing unit 11 of the control unit 10.

The width data storage unit 22 is used to store width data calculated by a width calculation unit 12 of the control unit 10.

The map data storage unit 23 is used to provide map data for a width output control unit 13 of the control unit 10.

The control unit 10 includes, for example, a central processing unit (CPU), and also includes the terrain data processing unit 11, width calculation unit 12 and width output control unit 13 as processing functions necessary for width calculation.

The functions of the terrain data processing unit 11, width calculation unit 12 and width output control unit 13 are fulfilled by causing the CPU to execute programs stored in the program memory of the storage unit 20.

Note that the programs for executing the processing by the terrain data processing unit 11, width calculation unit 12 and width output control unit 13 may be stored in advance in the storage unit 20 in the width calculation apparatus 100 for use or may be stored in an application server and the like on a network for use.

In this case, the width calculation apparatus 100 downloads a necessary program from the application server via the network when the need arises to fulfill the functions of the terrain data processing unit 11, width calculation unit 12 and width output control unit 13.

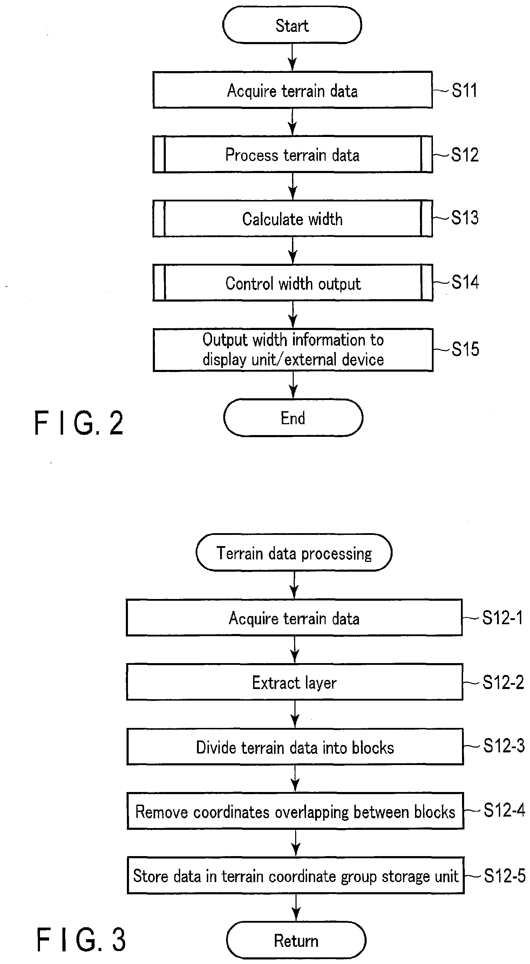

FIG. 2 is a flowchart showing an example of a procedure for the entire width calculation process to be performed by the width calculation apparatus according to the embodiment of the present invention.

First, the width calculation apparatus 100 acquires terrain data (S11), calculates terrain coordinate group data by terrain data processing to be described later (S12), calculates a width by a width calculation process to be described later (S13), performs a width output control process to be described later (S14), and outputs a processing result to a display unit or an external device (S15).

FIG. 3 is a flowchart showing an example of a procedure for terrain data processing to be performed by the width calculation apparatus according to the embodiment of the present invention.

Assume here that, as an example of terrain data, a number of boundaries between various objects such as roads, sidewalks, rivers and buildings are plotted and expressed as nodes based on latitude information and longitude information and the continuity of these boundaries is expressed by straight lines (links) connecting adjacent nodes.

Assume that an area occupied by the terrain is represented on a map or the like by drawing a figure by the nodes and links. The terrain data may be created by a person based on an aerial photograph, for example.

In this case, the terrain data are managed separately as nodes and links of only roads if the object is roads, as those of only sidewalks if it is sidewalks, as those of only rivers if it is rivers, and as those of only buildings if it is buildings. When these nodes and links are superposed appropriately as layers, more complicated terrain can be expressed.

In addition, assume that an object extending widely, such as roads is managed by dividing it into small areas (blocks) with their intersections, etc. as boundaries between the areas. The following is an example of terrain data of road sections. The terrain data of sidewalk sections is managed separately from that of the road sections. The format of terrain data of the sidewalk sections is the same as that of terrain data of the road sections.

(Examples of Terrain Data of Road Sections)

Road section block (1) : $[(x_{r1}, y_{r1}), (x_{r2}, y_{r2}), ..., (x_{r7}, y_{r7}), (x_{r1}, y_{r1})]$
Road section block (2) : $[(x_{r8}, y_{r8}), (x_{r9}, y_{r9}), ..., (x_{r14}, y_{r14}), (x_{r8}, y_{r8})]$

Assume here that each of the road section blocks has the same value at the starting and ending point nodes and a figure drawn by a straight line (link) connecting the nodes is drawn unicursally.

As described above, the nodes are expressed by latitude information and longitude information, but may be expressed using, for example, a distance from a certain starting point as in the Japanese plane rectangular coordinate system or using latitude information and longitude information obtained by converting these.

As a process shown in FIG. 3, first, the terrain data processing unit 11 acquires terrain data (S12-1), and extracts terrain data of layers representing a road section and a sidewalk section (S12-2).

Then, the terrain data processing unit 11 divides the extracted terrain data into blocks to be described later through a block division process (S12-3).

The terrain data processing unit 11 also removes information on nodes that overlap between blocks of the terrain data through an inter-block overlapping coordinates removing process, which will be described later (S12-4), and stores terrain coordinate group data that is data after the removal in the terrain coordinate group storage unit 21 of the storage unit 20 (S12-5).

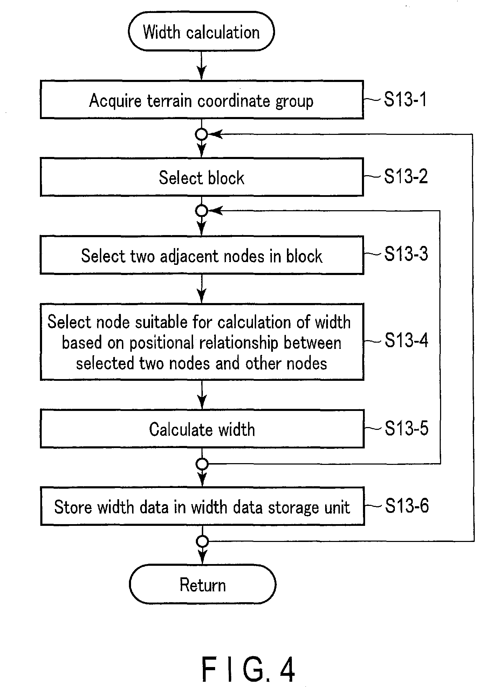

FIG. 4 is a flowchart showing an example for a procedure of a width calculation process to be performed by the width calculation apparatus according to the embodiment of the present invention.

As a selection processing unit, the width calculation unit 12 acquires terrain coordinate group data from the terrain coordinate group storage unit 21 of the storage unit 20 (S13-1), and selects a block to be processed from the terrain coordinate group data (S13-2).

Then, the width calculation unit 12 selects two adjacent nodes in the selected block (S13-3). Based on the positional relationship between the selected two nodes and the other nodes in the selected block, the width calculation unit 12 selects from the other nodes a node suitable for the calculation of the width of an object (S13-4).

In the present embodiment, two adjacent nodes are selected in S13-3, but the present invention is not limited to this. For example, a plurality of nodes, which are located on the same straight line and are close to each other, may be selected.

In addition, the width calculation unit 12 calculates the width from the positional relationship between the node selected in S13-4 and the two adjacent nodes (S13-5), and stores data of the width in the width data storage unit 22 of the storage unit 20 (S13-6). S13-2 to S13-6 are executed for each block selected from the terrain coordinate group data, and S13-3 to S13-5 are executed for each set of two nodes selected in the block.

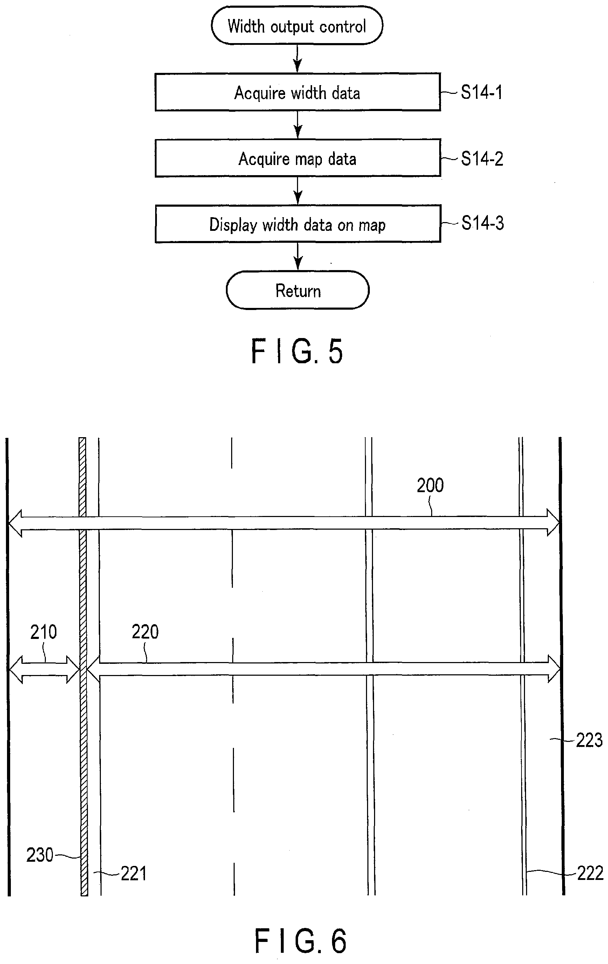

FIG. 5 is a flowchart showing an example of a procedure for a width output control process to be performed by the width calculation apparatus according to the embodiment of the present invention.

First, the width output control unit 13 acquires width data from the width data storage unit 22 of the storage unit 20 (S14-1), and acquires map data from the map data storage unit 23 (S14-2). The width output control unit 13 outputs the width data to a display device in the width calculation apparatus 100 or a display device outside the width calculation apparatus 100 and displays it on the map data based on latitude information and longitude information of the width data (S14-3).

FIG. 6 is a plan view showing an example of each part of a road.

In the example shown in FIG. 6, a road section 200 as a road includes a sidewalk section 210 as a sidewalk and a roadway section 220 as a roadway. Assume that the roadway section 220 includes a road shoulder 221 adjacent to the sidewalk 210, a mark line 222 and a side strip 223.

In addition, a concrete boundary block 230 is provided at the boundary between the sidewalk section 210 and the roadway section 220. The structure of the road section 200 is not limited to the example shown in FIG. 6. For example, the road shoulder 221 may be provided with a post box and trees may.

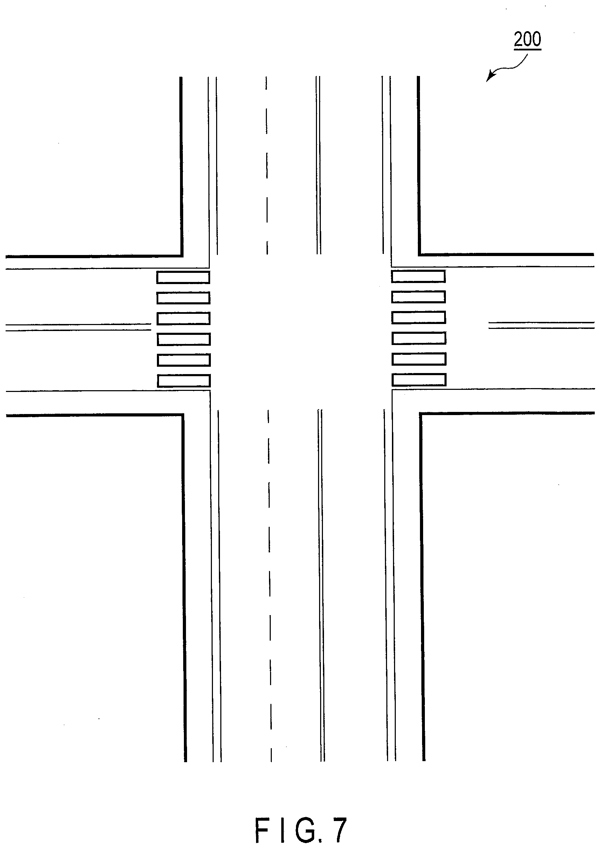

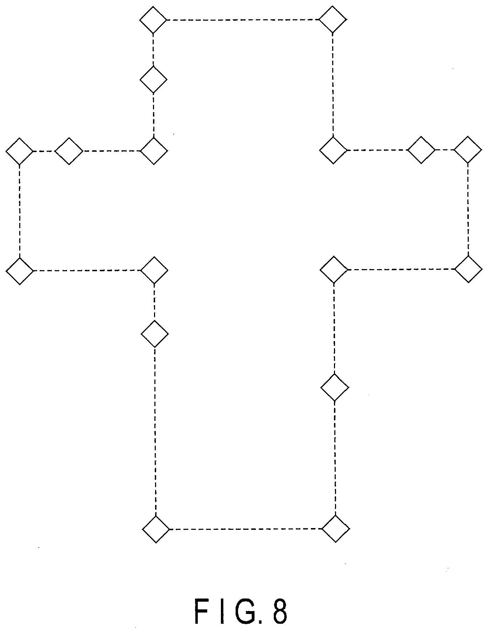

FIG. 7 is an illustration of an example of an image of a road section. FIG. 8 is a diagram showing an example of a terrain data image of the road section.

FIG. 8 also shows an example of nodes and links of terrain data representing the road section 200 created from the image of the road section shown in FIG. 7.

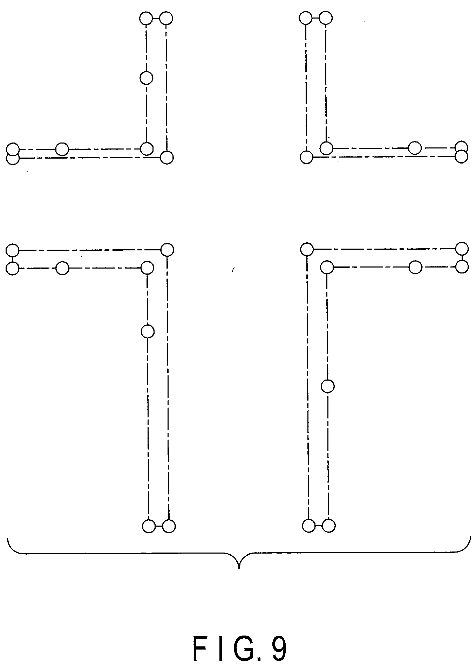

FIG. 9 is a diagram showing an example of a terrain data image of a sidewalk section. FIG. 9 also shows an example of nodes and links of terrain data representing the sidewalk section 210 created from the image of the road section shown in FIG. 7.

The following is an example of node data representing a road section block.

Road section block: $[(x_{r1}, y_{r1}), (x_{r2}, y_{r2}),..., (x_{r17}, y_{r17}), (x_{r18}, y_{r18}), (x_{r1}, y_{r1})]$

The following is an example of node data representing sidewalk blocks.

Sidewalk section block (1): $[(x_{s1}, y_{s1}), (x_{s2}, y_{s2}), ..., (x_{s7}, y_{s7}), (x_{s1}, y_{s1})]$
Sidewalk section block (2): $[(x_{s8}, y_{s8}), (x_{s9}, y_{s9}), ..., (x_{s14}, y_{s14}), (x_{s8}, y_{s8})]$

Note that the rhombic figures in FIG. 8 and the round figures in FIG. 9 each represent a node and each node is represented by the coordinates of $(x, y)$ in the foregoing terrain coordinate group data of the road and sidewalk sections. Assume in this example that there may be a node whose coordinate is common to the road and sidewalk sections like $(x_{r1}, y_{r1})$ and $(x_{s1}, y_{s1})$, for example.

Next is a description of an example of width calculation. The present embodiment is directed to an example of each of the processes of S13-3, S13-4, S13-5 and S13-6, that is, (1) a process of selecting two adjacent nodes in a block and, based on the positional relationship between the selected two nodes and the other nodes in the block, selecting from the other nodes a node suitable for the calculation of the width of an object; (2) a process of calculating a width from the positional relationship between the selected two nodes and the two adjacent nodes; and (3) a process of storing data of the width in the width data storage unit 22.

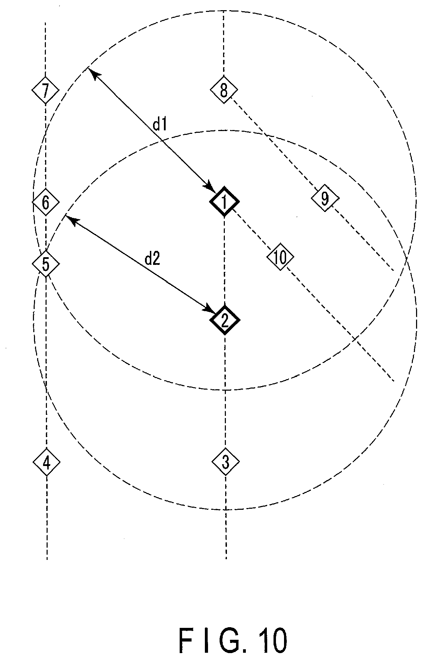

FIG. 10 is a diagram showing a first example of the width calculation. This example is directed to extraction of a node in which the distance between two successive points is equal to or less than a fixed value.

First, as a selection processing unit, the width calculation unit 12 selects two adjacent nodes and selects a node group existing within a fixed distance from the coordinates of both the nodes.

Assume that in the block shown in FIG. 10, the terrain coordinate group data is described such that a unicursal route is formed in a clockwise direction like a road section block A described below.

Then, in the terrain coordinate group data, a certain node and nodes before and after the node, that is, two points before and after the node on the unicursal route are adjacent to each other. In the present embodiment, the width calculation unit 12 uses this adjacency to use a set of a node and a node described as a coordinate immediately after this node in the road section block A for the width calculation process.

Road section block A: $[(x_{r1}, y_{r1}), (x_{r2}, y_{r2}), . . . , (x_{r9}, y_{r9}), (x_{r10}, y_{r10}), (x_{r1}, y_{r1})]$

The present invention is not limited to this. In the terrain coordinate group data, a set of a node and its preceding node, that is, a node described immediately before the node on the unicursal route may be used for the width calculation process. In addition, when the terrain coordinate group data is described such that a unicursal route is formed in a counterclockwise direction, the width calculation unit 12 may perform the subsequent processes to conform to the description or may replace the order of description in advance along the clockwise direction.

Then, the width calculation unit 12 determines distance d as a parameter necessary for a process of selecting a node suitable for use in the width calculation process. The distance d may be, for example, a fixed value (e.g., 100 [m]), an average distance between nodes in the block, a value obtained by multiplying the distance by N, or a value obtained by multiplying the national average width for each road type (expressways, city roads, etc.) by M. In addition, the width calculation unit 12 may determine a plurality of distances such as distances d1 and d2.

Subsequently, as a selection processing unit, the width calculation unit 12 selects, under the OR condition, a node K existing within the fixed distance d from two selected nodes "1" and "2", as shown in FIG. 10, in the road section block A.

In the example shown in FIG. 10, as a selection processing unit, the width calculation unit 12 selects nodes "5," "6" and "8" to "10" existing within the distance d1 from the node "1" of the two selected nodes "1" and "2" in the road section block A, selects nodes "3," "5," "9" and "10" existing within the distance d2 from the node "2" and selects nodes "3," "5," "6" and "8" to "10" which meet the OR condition of the selected nodes.

When each node of the road section block A is described by latitude information and longitude information, the width calculation unit 12 converts the latitude information and the longitude information described in each node into the Japanese plane rectangular coordinate system, and then performs calculations relating to the distances d1 and d2.

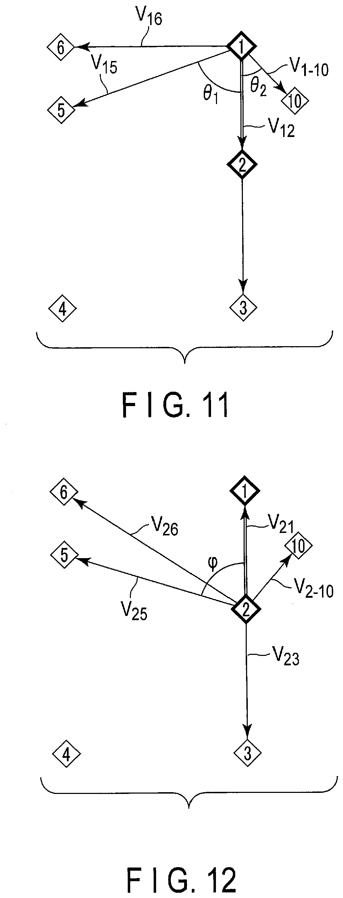

FIGS. 11 and 12 are diagrams showing a second example of the width calculation. This example is directed to extraction of a node that is orthogonal to a vector connecting two points.

Subsequently, as shown in FIG. 11, the width calculation unit 12 calculates an inner product of vector "1 → 2" ($V_{12}$) and vector "1 → each node K" ($V_{1K}$) for each node K selected for the node "1."

As shown in FIG. 12, the width calculation unit 12 also calculates an inner product of vector "2 → 1" ($V_{21}$) and vector "2 → each node K" ($V_{2K}$) for each node K selected for the node "2."

There are characteristics that the inner product is a positive value when the angle between vectors is between 0 degree and 90 degrees, it is 0 when the angle is between 90 degrees, and it is a negative value when the angle is between 90 degrees and 180 degrees.

From the characteristics, the width calculation unit 12 determines a node K in which the inner products calculated in accordance with the following expressions (1) and (2) are both positive values thereby to select a node K suitable as an origin of a perpendicular drawn orthogonally to the vector "1 → 2" from the own node. In the example shown in FIGS. 11 and 12, nodes "5" and "10" correspond to the node K.

In this example, the case where the inner product is 0 is excluded, but it may include 0.

$$\overrightarrow{V_{12}} \cdot \overrightarrow{V_{1K}} > 0 \quad \text{... expression (1)}$$

$$\overrightarrow{V_{21}} \cdot \overrightarrow{V_{2K}} > 0 \quad \text{... expression (2)}$$

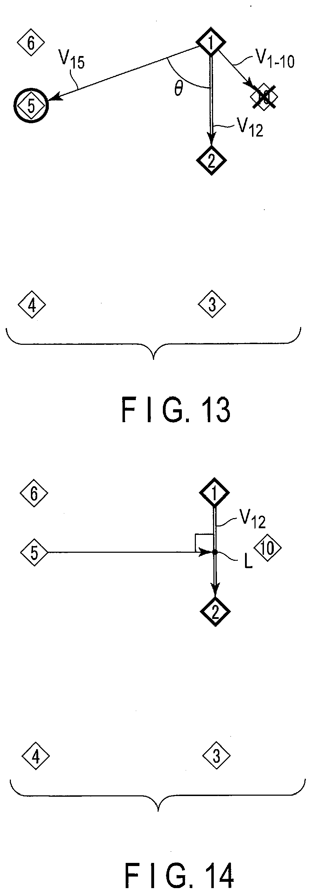

FIG. 13 is a diagram showing a third example of the width calculation. This example is directed to a process of extracting a node existing in a clockwise direction with respect to a vector connecting two points, and the like.

Subsequently, as shown in FIG. 13, the width calculation unit 12 calculates an outer product of the vector "1 → 2" and vector "1 → each selected node K" (here, the nodes "5" and "10" that are suitable as the origin of the perpendicular).

Assuming that the first and second vectors are present on the same plane, there are characteristics that the outer product is a negative value when the second vector exists in the direction in which the first vector is rotated clockwise and it is a positive value when the second vector exists in a direction in which the first vector is rotated counterclockwise. From the characteristics, the width calculation unit 12 selects a node K which satisfies the following expression (3).

$$(\overrightarrow{V_{12}} \times \overrightarrow{V_{1K}})_z < 0 \quad \text{... expression (3)}$$

In the example shown in FIG. 13, node "5" corresponds to the node K.

This is based on the assumption that the terrain coordinate group data of a road section is described so as to form a unicursal route clockwise such as node "1" → node "2" → ... → node "10" → node "1" as described above, and uses the characteristics that a node existing on the opposite side of a road with regard to the vector "1 → 2" is present in a direction in which the vector "1 → 2" is rotated clockwise.

When the description method is different, for example, when the terrain coordinate group data is described so as to form a unicursal route counterclockwise, such as node "1" → node "10" → ... → node "2" → node "1," the conditional expressions may be changed.

In this case, a node existing on the opposite side of the road with respect to the vector "2 → 1" when the node K is calculated, is present in a direction in which the vector "2 → 1" is rotated counterclockwise. Thus, a node K whose outer product is a positive value is selected as given in the following expression (4).

$$(\overrightarrow{V_{21}} \times \overrightarrow{V_{2K}})_z > 0 \quad \ldots \text{expression (4)}$$

In this example, the width calculation unit 12 selects a node K existing within a fixed distance d from two selected nodes under the OR condition, and then extracts a node that is orthogonal to a vector connecting two points. However, the selection and extraction may be performed in reverse order.

That is, in FIG. 10, the width calculation unit 12 calculates an inner product of vector "1 → 2" ($V_{12}$) and vector "1 → each node K" ($V_{1K}$) for each node K other than nodes "1" and "2" and selects node K whose inner product is a positive value according to the expression (1), thereby selecting nodes "3" to "5" and "10."

Similarly, the width calculation unit 12 calculates the inner product of vector "2 → 1" ($V_{21}$) and vector "2 → each node K" ($V_{2K}$) and selects node K whose inner product is a positive value according to the expression (2), thereby selecting nodes "5" and "10."

Then, the width calculation unit 12 calculates an outer product of the vector "1 → 2" and vector "1 → each selected node K" (here, nodes "5" and "10") and selects node K whose outer product is a negative value according to the expression (3), thereby selecting node "5."

Then, the width calculation unit 12 determines whether the node "5" exists within a fixed distance d from nodes "1" and "2" under the OR condition. The node "5" corresponds to the condition.

With respect to the extraction of a node that is orthogonal to a vector connecting two nodes, too, the width calculation unit 12 may obtain a node in which the outer product of the vector "1 → 2" and vector "1 → all nodes K" is a negative value (nodes "4" to "7" are selected), and then obtain an inner product of the vector "1 → 2" ($V_{12}$) and the vector "1 → each node K" ($V_{1K}$) and an inner product of the vector "2 → 1" ($V_{21}$) and the vector "2 → each node K" ($V_{2K}$), and select a node in which both inner products are positive values. Here, the node "5" is selected.

FIG. 14 is a diagram showing a fourth example of the width calculation. In this example, a perpendicular is drawn to calculate the coordinates of an intersection.

As shown in FIG. 14, the width calculation unit 12 lowers a perpendicular from the node "5" to the vector "1 → 2" to calculate a distance between the coordinates of the node "5" and the coordinates of intersection L between the vector "1 → 2" and the perpendicular.

For example, the width calculation unit 12 calculates the distance of a vector "K → L" according to the following expressions (5) and (6) based on the outer product of the vectors "1 → 2" and "1 → K" and the relationship between the vectors "1 → 2" and "1 → K."

$$\overrightarrow{V_{12}} \times \overrightarrow{V_{1K}} = \left|\overrightarrow{V_{12}}\right|\left|\overrightarrow{V_{1K}}\right|\sin\theta \quad \ldots \text{expression (5)}$$

$$\left|\overrightarrow{V_{KL}}\right| = \left|\overrightarrow{V_{1K}}\right|\sin\theta \quad \ldots \text{expression (6)}$$

From the expressions (5) and (6), the width calculation unit 12 can calculate the distance of the vector "K -> L," in this case, the distance between the coordinates of the intersection L and the coordinates of the node "5" according to the following expression (7).

$$\left|\overrightarrow{V_{KL}}\right| = \frac{\overrightarrow{V_{12}} \times \overrightarrow{V_{1K}}}{\left|\overrightarrow{V_{12}}\right|} \quad \ldots \text{expression (7)}$$

The width calculation unit 12 calculates the distance of a vector "1 → L" based on the inner product of the vectors "1 → 2" and "1 → K" and the relationship between the vectors "1 → K" and "1 → L" and calculates the ratio of the distance between the vectors "1 → 2" and "1 → L." Using a result of the calculations and the latitude information and longitude information of the nodes "1" and "2," the width calculation unit 12 can calculate the coordinates of the intersection L according to the following expressions (8) and (9).

$$\overrightarrow{V_{12}} \cdot \overrightarrow{V_{1K}} = \left|\overrightarrow{V_{12}}\right|\left|\overrightarrow{V_{1K}}\right|\cos\theta \quad \ldots \text{expression (8)}$$

$$\left|\overrightarrow{V_{1L}}\right| = \left|\overrightarrow{V_{1K}}\right|\cos\theta \quad \ldots \text{expression (9)}$$

From the expressions (8) and (9), the width calculation unit 12 can calculate the distance of the vector "1 → L" according to the following expression (10).

$$\left|\overrightarrow{V_{1L}}\right| = \frac{\overrightarrow{V_{12}} \cdot \overrightarrow{V_{1K}}}{\left|\overrightarrow{V_{12}}\right|} \quad \text{... expression (10)}$$

The coordinates $(x_L, y_L)$ of the intersection L are present on the straight line connecting two points of $(x_{r1}, y_{r1})$ and $(x_{r2}, y_{r2})$. The width calculation unit 12 can thus calculate the coordinates of the intersection L according to the following expressions (11) and (12). When necessary, the width calculation unit 12 converts the coordinate system into the Japanese plane rectangular coordinate system and then calculates the coordinates of the intersection L.

$$x_L = x_{r1} + (x_{r2} - x_{r1}) \times \frac{\left|\overrightarrow{V_{1L}}\right|}{\left|\overrightarrow{V_{12}}\right|} \quad \text{... expression (11)}$$

$$y_L = y_{r1} + (y_{r2} - y_{r1}) \times \frac{\left|\overrightarrow{V_{1L}}\right|}{\left|\overrightarrow{V_{12}}\right|} \quad \text{... expression (12)}$$

Based on the above, the width calculation unit 12 stores the distance of the vector "1 → L" (i.e., the width KL) in the width data storage unit 22, as the following width (1), together with the coordinates of the node K (a node suitable for use in the width calculation process) and the coordinates of the intersection L.
Width (1) : [$(x_k, y_k)$, $(x_L, y_L)$, KL]
Note that when there are a plurality of nodes K as described below, the width calculation unit 12 stores a width corresponding to each node as a separate record in the width data storage unit 22 as the following widths (1) and (2).

   Width (1): [$(x_{k1}, y_{k1})$, $(x_{L1}, y_{L1})$, KL1]
   Width (2): [$(x_{k2}, y_{k2})$, $(x_{L2}, y_{L2})$, KL2]

The width calculation unit 12 carries out the foregoing process in sequence for nodes "2" and "3", for nodes "3" and "4", ... and for nodes "10" and "1" and stores the width data in the width data storage unit 22. After the process for the block is completed, the width calculation unit 12 performs a process for the next block.
Assume in the present embodiment that the width data is stored in the width data storage unit 22 as separate data items for road types, such as separate data items for road sections and sidewalk sections.

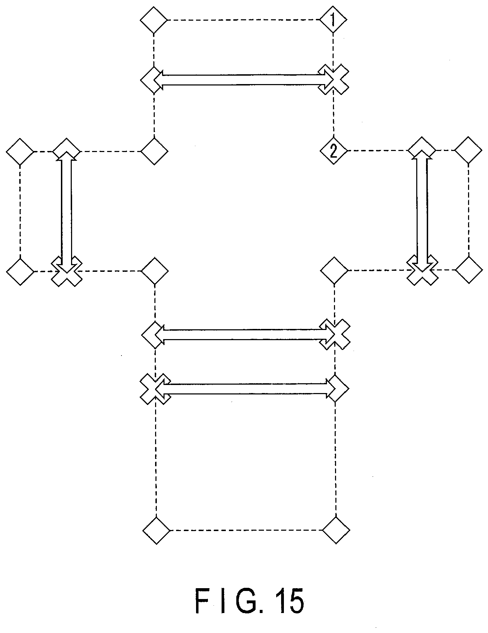

FIG. 15 is a diagram illustrating an example of calculation of the width of a road section.
FIG. 15 also illustrates between which nodes the width of a road section is calculated from one example of the nodes and links of terrain data representing the road section shown in FIG. 8.

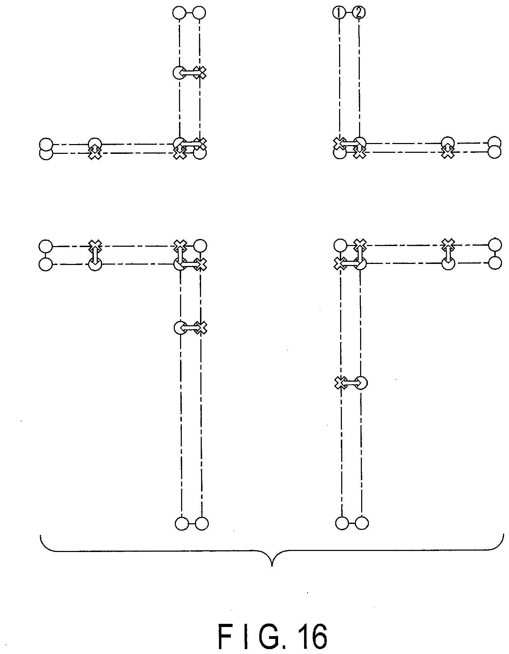

FIG. 16 is a diagram illustrating an example of calculation of the width of a sidewalk section.
FIG. 16 also illustrates between which nodes the width of a sidewalk section is calculated from one example of the nodes and links of terrain data representing the sidewalk section shown in FIG. 9.
In the present embodiment, the road section shown in FIG. 8 and the sidewalk section shown in FIG. 9 have nodes with the same coordinates. Thus, the width calculation unit 12 can calculate a difference between the widths calculated for the nodes to calculate the width of the roadway.

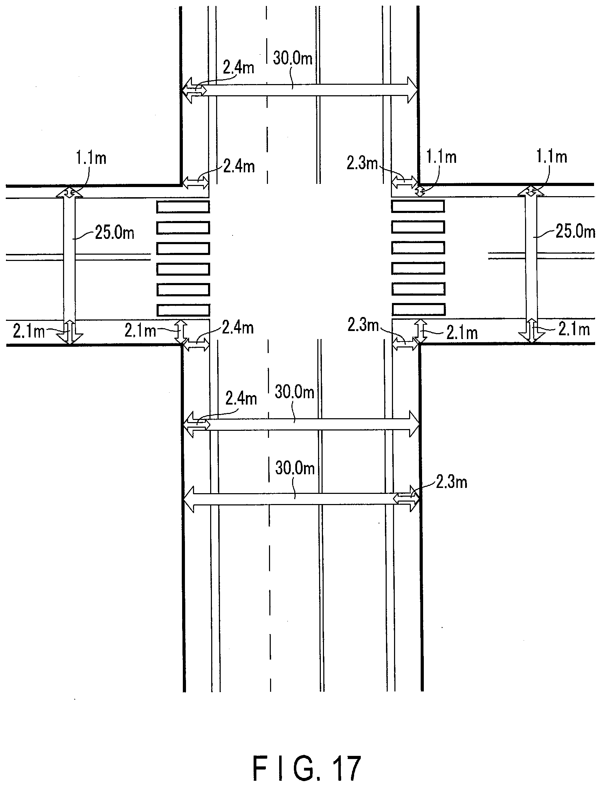

FIG. 17 is an illustration of an example of output of width information.
FIG. 17 illustrates an example of a procedure for a process to be performed by the width output control unit 13 in which width data and map data are acquired, and the width data is displayed on the map data and output.
The width output control unit 13 provides the map data with latitude and longitude information of the node K (a node suitable for use in the width calculation process) and the intersection L of the width data, displays an arrow as a line connecting two nodes, and also displays the width KL in the vicinity of the arrow, thereby obtaining output data of the width.
The following is a description of an example of an exceptional process.

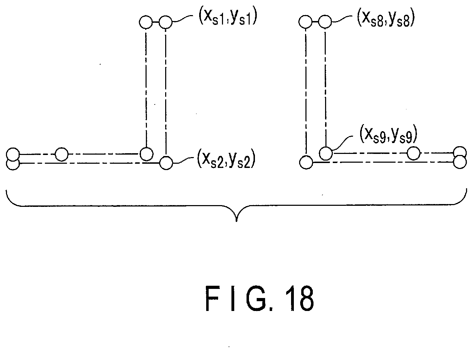

FIG. 18 is a diagram illustrating a first example of an exceptional process. This example is directed to the block division process (S12-3) to be performed by the terrain data processing unit 11.
As will be described below, if the terrain coordinate group data is data described as a sidewalk block (1) in which a plurality of blocks are one item of data, the terrain data processing unit 11 may divide it into the following sidewalk section blocks (1-1) and (1-2) in block units as pre-processing, and then perform subsequent processes.

(Pre-processing)

Sidewalk section block (1) : $(x_{s1} \, y_{s1})$, $(x_{s2}, y_{s2})$, ..., $(x_{s7}, y_{s7})$, $(x_{s1}, y_{s1})$, $(x_{s8}, y_{s8})$, $(x_{s9}, y_{s9})$ , ..., $(x_{s14}, y_{s14})$, $(x_{s8}, y_{s8})$, ...]
(Post-processing)
Sidewalk section block (1-1): $[(x_{s1}, y_{s1})$, $(x_{s2}, y_{s2})$, ... , $(x_{s7}, y_{s7})$, $(x_{s1}, y_{s1})]$
Sidewalk section block (1-2) : $(x_{s8}, y_{s8})$, $(x_{s9}, y_{s9})$, ..., $(x_{s14}, y_{s14})$, $(x_{s8}, y_{s8})]$

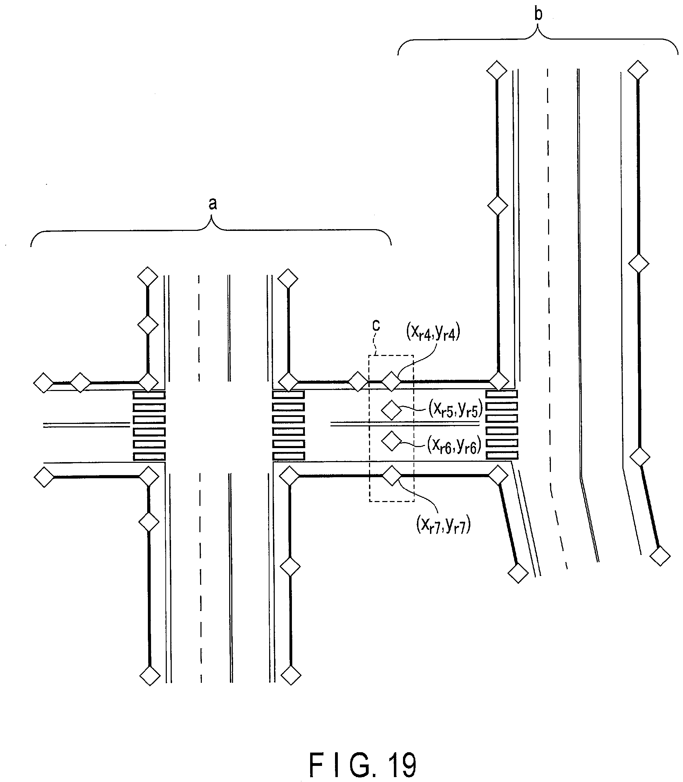

FIG. 19 is a diagram illustrating a second example of the exceptional process. This example is directed to the inter-block overlapping coordinates removing process to be performed by the terrain data processing unit 11 (S12-4).
When there is a node in a roadway section or the like as a junction (c in FIG. 19) between a block (a in FIG. 19) and another block (b in FIG. 19) as illustrated in FIG. 19, the terrain data processing unit 11 may remove, as pre-processing, nodes common to a plurality of blocks, which are nodes corresponding to $(x_{r4}, y_{r4})$, $(x_{r5}, y_{r5})$, $(x_{r6}, y_{r6})$, $(x_{r7}, y_{r7})$ in the following road section terrain data (1) to (5) here, as corresponding to the node in a roadway section, and then perform subsequent processes.

Road section terrain data (1) : $[(x_{r1}, y_{r1})$, ... , $(x_{r4}, y_{r4})$, $(x_{r5}, y_{r5})$, $(x_{r6}, y_{r6})$, $(x_{r7}, y_{r7})$, ... , $(x_{r17}, y_{r17})$, $(x_{r18}, y_{r18})$, $(x_{r1}, y_{r1})]$

Road section terrain data (5) : $[(x_{r80}, y_{r80})$, ..., $(x_{r4}, y_{r4})$, $(x_{r5}, y_{r5})$, $(x_{r6}, y_{r6})$, $(x_{r7}, y_{r7})$, ..., $(x_{r80}, y_{r80})]$

In addition, the first and last nodes of the common nodes may be left as the edges of the road. In the example shown in FIG. 19, the first node is node "4" $(x_{r4}, y_{r4})$ and the last node is node "7" $(x_{r7}, y_{r7})$.
If, furthermore, a road is treated as a separate layer for each road type, such as an expressway, a national road, and a prefectural road, without being uniformly summarized as a road, a connecting surface also exists among different road types. For this reason, the terrain data processing unit 11 may perform a process such as removing nodes or leaving nodes at the edges of the road as a pre-processing, and then perform a process of removing other nodes.
However, there is a case in which the width cannot be calculated if a three-dimensional connecting surface between road types is to be removed, such as a sidewalk existing as a layer on a road or an expressway existing on a general road. It is therefore necessary to pay attention to the three-dimensional structure between layers.

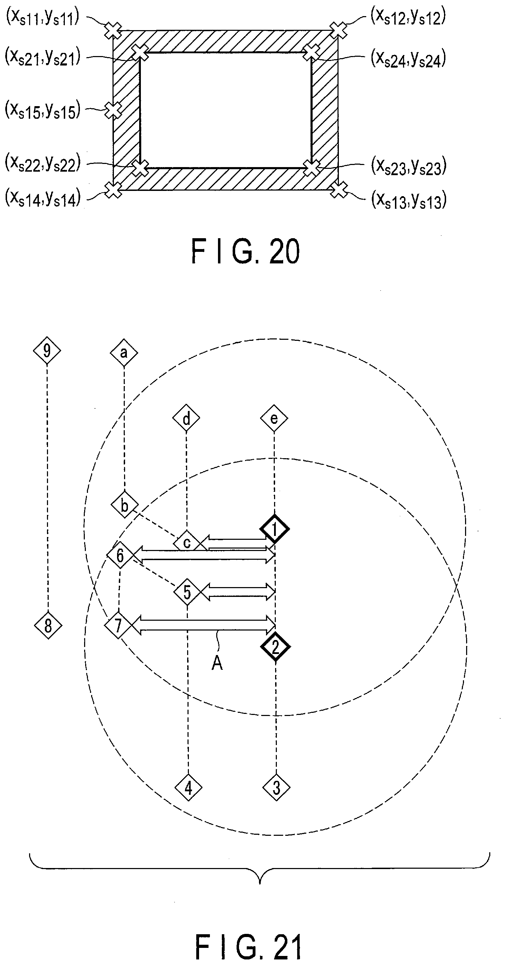

FIG. 20 is a diagram illustrating a third example of the exceptional process. This example is directed to the width calculation process (S13) to be performed by the width calculation unit 12.
Assume here that, as shown in FIG. 20, the terrain coordinate group data of a sidewalk section block as described below cannot be described so as to form a unicursal route and, in other words, it is described separately as the outer periphery (corresponding to (1) below) and the inner periphery (corresponding to (2) below) in the block.

(1): $[(x_{s11}, y_{s11})$, $(x_{s12}, y_{s12})$, $(x_{s13}, y_{s13})$, $(x_{s14}, y_{s14})$, $(xs_{15}, y_{s15})$, $(x_{s11}, y_{s11})]$
(2): $[(x_{s21}, y_{s21})$, $(x_{s22}, y_{s22})$, $(x_{s23}, y_{s23})$, $(x_{s24}, y_{s24})$, $(x_{s21}, y_{s21})]$

Even with the above descriptions, the width calculation unit 12 may first select, from the outer peripheral node, a node K satisfying a condition on both the outer peripheral node and the inner peripheral node in the terrain coordinate group data to perform the same process, and then select, from the inner peripheral node, a node K satisfying a condition on both the outer peripheral node and the inner peripheral node to perform the same process.
(Sidewalk section block) : $[(x_{s11}, y_{s11})$, $(x_{s12}, y_{s12})$, $(x_{s13}, y_{s13})$, $(x_{s14}, y_{s14})$, $(x_{s15}, y_{s15})$, $(x_{s11}, y_{s11})]$, $[(x_{s21}, y_{s21})$, $(x_{s22}, y_{s22})$, $(x_{s23}, y_{s23})$, $(x_{s24}, y_{s24})$, $(x_{s21}, y_{s21})]$
In the example shown in FIG. 20, furthermore, the description order of nodes on the outer periphery is clockwise and that of nodes on the inner periphery is counterclockwise. Thus, the node K may always be a node in a direction in which the first vector is rotated clockwise.
On the other hand, when the description order of nodes on the inner periphery is clockwise and the width calculation unit 12 selects, from the inner peripheral node, a node K satisfying a condition on both the outer peripheral node and the inner peripheral node as described above, it may change the process appropriately by, for example, selecting a node in a direction in which the first vector is rotated counterclockwise as the node K.

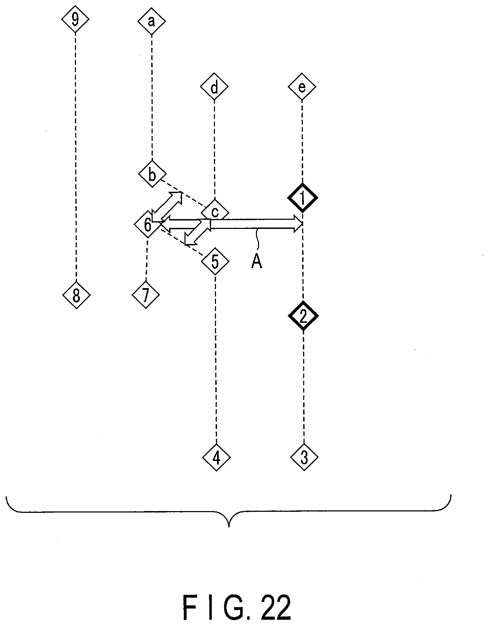

FIG. 21 is a diagram illustrating a fourth example of the exceptional processing. FIG. 22 is a diagram illustrating a fifth example of the exceptional processing. These examples are directed to a process for a complex block. When the terrain represented in one block is complicated as illustrated in FIGS. 21 and 22, a node K not suitable for use as a width may be selected depending on the value of distance d.

For example, the width line drawn from the node "7" to a point between the nodes "1" and "2" in FIG. 21 is not suitable as a road width because it passes through an area which is not a road section. As for such a node K, the width calculation unit 12 calculates the width line A shown in FIG. 21 and, as post-processing, it evaluates whether the width line A has an intersection with a vector other than the vector "1 → 2" and whether the width line A has an intersection with the vector "4 → 5" in the example shown in FIG. 21.

When the calculated width line A has an intersection, the width calculation unit 12 may exclude the calculated width line A from an object to be stored in the width data storage unit 22 as being unsuitable for the road width.

In addition, for example, the width line A drawn from the node "6" to a point between the nodes "1" and "2" in FIG. 22 does not pass through an area that is not a road section. However, the width line A goes into the area of the road including the nodes "5," "6," "b" and "c." Thus, the width line A is not suitable as a road width.

As for such a node K, the width calculation unit 12 evaluates, as post-processing after calculating the width lines for all nodes in the block, whether the width lines have an intersection with each other. In the example shown in FIG. 22, the width calculation unit 12 evaluates whether the width line A drawn from the node "6" to the nodes "1" and "2" and the width line drawn from the node "c" to the nodes "5" and "6" have an intersection.

When the width line A has an intersection, the width calculation unit 12 may exclude the width line A from an object to be stored in the width data storage unit 22 as being unsuitable for the road width.

Further, when the target is a road with a small number of nodes and a very small number of width lines drawn in a block, such as a long straight road, an intermediate node "1.5" is provided between the nodes "1" and "2" and a processing may be performed using the nodes "1" and "1.5" and the nodes "1.5" and "2".

A supplementary description will be given below.

When each of the processes described above is performed for other blocks, map data which covers the nationwide road network and which includes width information on roads, sidewalks and roadways can be achieved.

When the coordinates of each node are expressed by the longitude and latitude or when the coordinates of each node are expressed sexagesimally in the form of degrees, minutes and seconds, the width calculation apparatus 100 may, for example, convert the coordinate system into the Japanese plane rectangular coordinate system to convert the coordinate system into a format suitable to calculate a distance and an angle. Similarly, when the width data is displayed on the map data, the width calculation apparatus 100 may perform a process of converting the coordinate system into a coordinate system matching the displayed map.

If there is terrain data which is not limited to a road, the width calculation apparatus 100 can also calculate the width of an object such as a river and a building and achieve map data provided with the width information.

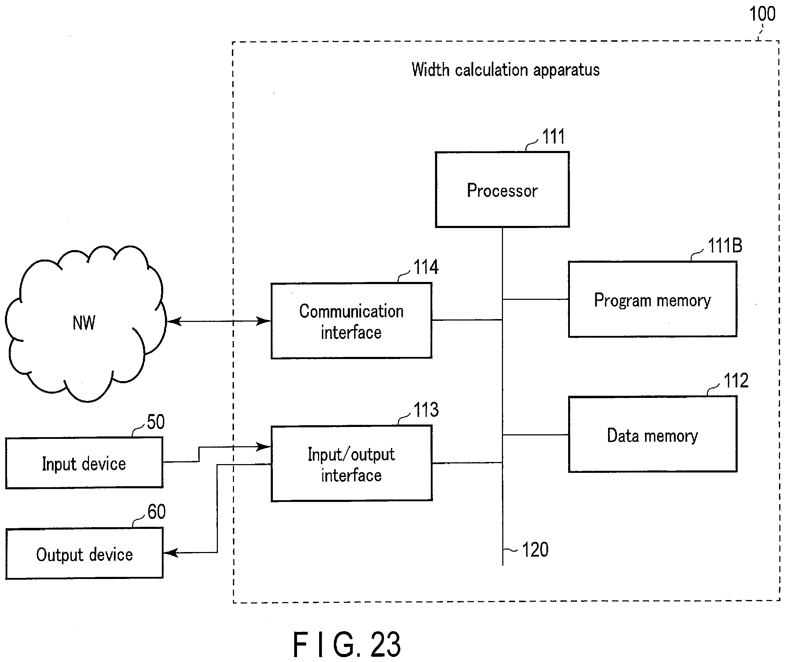

FIG. 23 is a block diagram showing an example of a hardware configuration of the width calculation apparatus according to the embodiment of the present invention.

In the example shown in FIG. 23, the width calculation apparatus 100 according to the above-described embodiment is configured by, for example, a server computer or a personal computer, and includes a hardware processor 111 such as a CPU. A program memory 111B, a data memory 112, an input/output interface 113, and a communication interface 114 are connected to the hardware processor 111 via a bus 120. The input/output I/F 30 can be configured by using the input/output interface 113 and the communication interface 114 shown in FIG. 23.

The communication interface 114 includes, for example, one or more wireless communication interface units to allow information to be transmitted to and received from a communication network NW. Examples of the wireless interface that may be used include an interface that adopts a low-power wireless data communication standard such as a wireless local area network (LAN).

An input device 50 and an output device 60 for an operator attached to the width calculation apparatus 100 are connected to the input/output interface 113.

The input/output interface 113 performs a process of taking in operation data input by an operator through an input device 50 such as a keyboard, a touch panel, a touchpad, a mouse, etc., and outputting output data to an output device 60 including a display device that uses liquid crystals, organic electroluminescence (EL), etc. to cause the output device 60 to display the output data. As the input device 50 and the output device 60, a device built in the width calculation apparatus 100 may be used; alternatively, an input device and an output device of another information terminal capable of communicating with the width calculation apparatus 100 via a network NW may be used.

The program memory 111B used is, as a non-transitory, tangible storage medium, a combination of a non-volatile memory such as a read-only memory (ROM) and a non-volatile memory such as a hard disk drive (HDD) or a solid-state drive (SDD) that allows for on-demand writing and reading, and stores programs necessary for executing various control processes according to the embodiment.

The data memory 112 is a tangible storage medium in which, for example, the above-described nonvolatile memory and a volatile memory such as a random access memory (RAM) are used in combination, and is used to store various types of data acquired and created in the course of performing various processes.

The width calculation apparatus 100 according to the embodiment of the present invention, which function as software-based processing function units, may be configured as an information processing apparatus including the terrain data processing unit 11, width calculation unit 12 and width output control unit 13 illustrated in FIG. 1.

The terrain coordinate group storage unit 21, width data storage unit 22 and map data storage unit 23 of the storage unit 20 can be configured by using the data memory 112 shown in FIG. 23. However, the terrain coordinate group storage unit 21, width data storage unit 22 and map data storage unit 23 are not essential components in the width calculation apparatus 100, and may be units provided in an external storage medium such as a universal serial bus (USB) memory or a storage device such as a database server placed in a cloud.

All of the processing function units in each of the terrain data processing unit 11, width calculation unit 12 and width output control unit 13 can be achieved by causing the hardware processor 111 to read and execute a program stored in the program memory 111B. Note that some or all of these processing function units may be implemented by various other forms including integrated circuits such as an application-specific integrated circuit (ASIC) or a field-programmable gate array (FPGA).

As described above, the width calculation apparatus according to the embodiment of the present invention pays attention to the relationship between nodes in terrain data in which the position and shape of an object are represented by nodes or are represented by nodes and links to specify a node capable of drawing a line segment corresponding to the width and calculate the width from the relationship between the coordinates of two points constituting the line segment.

Thus, the width of a road can be calculated without using data of the centerline of the road. Furthermore, not only the width of a road but also the width of a roadway and that of a sidewalk can be calculated. When the shape of a road is changed by construction or the like, width information can quickly be reflected on the basis of, for example, polygon data generated from an aerial photograph or the like. Also, the roadway width and sidewalk width can easily be calculated from terrain data of an optional layer such as a road and a sidewalk by associating them with their respective terrain data.

According to the embodiment of the present invention, furthermore, it is possible to obtain in advance information as to whether there is a width that allows vehicles such as a garbage truck or a truck driven by a deliveryman to pass, whether there is a width of a road on which a vehicle can pass when another vehicle is parked or stopped inevitably on the road, and the like. Further, the embodiment of the present invention can provide a static map including width information, a navigation application for offering the optimum navigation using the width information, and the like.

The methods described in the embodiments can be stored as programs (software means) that can be executed by a computer, in a recording medium such as a magnetic disk (Floppy (registered trademark) disk, hard disk etc.), an optical disk (CD-ROM, DVD, MO etc.), and a semiconductor memory (ROM, RAM, flash memory etc.), or can also be transferred and distributed by means of a communication medium. Note that the programs stored in a medium may include a configuration program for configuring, in the computer, software means (including not only an execution program, but also a table and a data structure) that is to be executed by the computer. The computer that realizes the present apparatus loads the programs stored in the recording medium, configures the software means using the configuration program depending on the case, and performs the above-described processing due to operations being controlled by the software means. Note that the "recording medium" mentioned in the present specification is not limited to one for distribution, but may also include a recording medium such as a magnetic disk, a semiconductor memory, or the like that is provided in a device connected in the computer or connected thereto via a network.

Reference Signs List

100     Width calculation apparatus

10      Control unit

11      Terrain data processing unit

12      Width calculation unit

13      Width output control unit

20      Storage unit

21      Terrain coordinate storage unit

22    Width data storage unit

23    Input/output interface unit

200   Road section

210   Sidewalk section

220   Roadway section

221   Shoulder

222   Mark line

223   Side strip

230   Concrete boundary block


**Claims**

1.  An information processing apparatus comprising:

    a terrain data processing unit (11) configured to perform a terrain data process of calculating a terrain coordinate group based on terrain data, wherein in the terrain data positions and shapes of boundaries between various objects are represented by nodes, with optional links connecting adjacent nodes expressing continuity of these boundaries,
    and wherein the terrain coordinate group reflects a portion of an object in terms of a plurality of nodes that are describable as defining a unicursal route; and
    a selection processing unit (12) configured to select nodes adjacent or close to each other on the unicursal route, and to select a node suitable to calculate a width of the object from other nodes based on a positional relationship between the selected nodes and the other nodes,

    wherein:

    the selection processing unit is further configured to select nodes suitable as an origin of a perpendicular drawn to a link connecting the selected nodes adjacent or close to each other and select a node suitable to calculate the width from the selected nodes suitable as an origin of the perpendicular; and
    the information processing apparatus is further configured to comprise a width calculation unit which calculates an intersection between the link and the perpendicular, and calculate a width of the object based on a positional relationship between the intersection and the node suitable to calculate the width or a distance of the perpendicular connecting the intersection and the node suitable to calculate the width.

2.  The information processing apparatus of claim 1, wherein the object is at least one object among a road, a sidewalk in the road, and a roadway in the road.

3.  The information processing apparatus of claim 1, further comprising a width output control unit which is configured to output information indicating the width calculated by the width calculation unit to an outside.

4.  The information processing apparatus of claim 3, wherein the width output control unit is configured to output information indicating one or more of the selected nodes adjacent or close to each other, the nodes suitable to calculate the width, and the intersection, in addition to the information indicating the width calculated by the width calculation unit.

5.  An information processing method executed by an information processing apparatus, the method comprising:

    calculating a terrain coordinate group based on terrain data, wherein in the terrain data positions and shapes of boundaries between various objects are represented by nodes, with optional links connecting adjacent nodes expressing continuity of these boundaries, and wherein the terrain coordinate group reflects a portion of an object in terms of a plurality of nodes that are describable as defining a unicursal route; selecting nodes adjacent or close to each other on the unicursal route, and selecting a node suitable to calculate a width of the object from other nodes based on a positional relationship between the selected nodes adjacent or close to each other and the other nodes,

wherein the method further comprises:

selecting nodes suitable as an origin of a perpendicular drawn to a link connecting the selected nodes adjacent or close to each other; selecting a node suitable to calculate the width from the selected nodes suitable as an origin of the perpendicular; calculating an intersection between the link and the perpendicular; and calculating a width of the object based on a positional relationship between the intersection and the node suitable to calculate the width or a distance of the perpendicular connecting the intersection and the node suitable to calculate the width.

6. An information processing program comprising instructions which, when carried out by an information processing apparatus, cause the apparatus to carry out the method of claim 5.

**Patentansprüche**

1. Informationsverarbeitungsvorrichtung, die Folgendes umfasst:

eine Geländedatenverarbeitungseinheit (11), die so konfiguriert ist, dass sie ein Geländedatenverfahren zum Berechnen einer Geländekoordinatengruppe basierend auf Geländedaten ausführt, wobei in den Geländedaten Positionen und Formen von Grenzen zwischen verschiedenen Objekten durch Knoten dargestellt werden, wobei optionale Verbindungen, die benachbarte Knoten verbinden, die Kontinuität dieser Grenzen ausdrücken, und wobei die Geländekoordinatengruppe einen Teil eines Objekts in Form einer Vielzahl von Knoten reflektiert, die als Definition einer unikursalen Route beschrieben werden können; und eine Auswahlverarbeitungseinheit (12), die so konfiguriert ist, dass sie Knoten, die benachbart oder nahe beieinander liegen, auf der unikursalen Route auswählt und einen Knoten, der geeignet ist, um eine Breite des Objekts zu berechnen, aus anderen Knoten auswählt, basierend auf einer Positionsbeziehung zwischen den ausgewählten Knoten und den anderen Knoten,

wobei:

die Auswahlverarbeitungseinheit ferner so konfiguriert ist, dass sie Knoten auswählt, die als Ursprung einer Senkrechten geeignet sind, die zu einer Verbindung gezogen wird, die die ausgewählten Knoten benachbart oder nahe beieinander verbindet, und einen Knoten, der geeignet ist, um die Breite zu berechnen, aus den ausgewählten Knoten auswählt, die als Ursprung der Senkrechten geeignet sind; und die Informationsverarbeitungsvorrichtung ferner so konfiguriert ist, dass sie eine Breitenberechnungseinheit umfasst, die einen Schnittpunkt zwischen der Verbindung und der Senkrechten berechnet, und eine Breite des Objekts basierend auf einer Positionsbeziehung zwischen dem Schnittpunkt und dem Knoten, der geeignet ist, um die Breite zu berechnen, oder eine Distanz der Senkrechten berechnet, die den Schnittpunkt und den Knoten verbindet, der geeignet ist, um die Breite zu berechnen.

2. Informationsverarbeitungsvorrichtung nach Anspruch 1, wobei das Objekt mindestens ein Objekt unter einer Straße, einem Gehweg auf der Straße und/oder einer Fahrbahn auf der Straße ist.

3. Informationsverarbeitungsvorrichtung nach Anspruch 1, die ferner eine Breitenausgabesteuereinheit umfasst, die so konfiguriert ist, dass sie Informationen, die die Breite anzeigen, die von der Breitenberechnungseinheit berechnet wird, nach außen ausgibt.

4. Informationsverarbeitungsvorrichtung nach Anspruch 3, wobei die Breitenausgabesteuereinheit so konfiguriert ist, dass sie zusätzlich zu den Informationen, die die Breite anzeigen, die von der Breitenberechnungseinheit berechnet wird, Informationen ausgibt, die einen oder mehrere der ausgewählten Knoten, die benachbart oder nahe beieinander liegen, die Knoten, die geeignet sind, um die Breite zu berechnen, und den Schnittpunkt anzeigen

5. Informationsverarbeitungsverfahren, das von einer Informationsverarbeitungsvorrichtung ausgeführt wird, wobei das Verfahren Folgendes umfasst:

Berechnen einer Geländekoordinatengruppe basierend auf Geländedaten, wobei in den Geländedaten Positionen und Formen von Grenzen zwischen verschiedenen Objekten durch Knoten dargestellt werden, wobei optionale Verbindungen, die benachbarte Knoten verbinden, die Kontinuität dieser Grenzen ausdrücken, und wobei die Geländekoordinatengruppe einen Teil eines Objekts in Form einer Vielzahl von Knoten reflektiert, die als Definition einer unikursalen Route beschrieben werden können;
Auswählen von Knoten, die benachbart oder nahe beieinander liegen, auf der unikursalen Route, und Auswählen eines Knotens, der geeignet ist, um eine Breite des Objekts zu berechnen, aus anderen Knoten basierend auf einer Positionsbeziehung zwischen den ausgewählten Knoten, die benachbart oder nahe beieinander liegen, und den anderen Knoten,
wobei das Verfahren ferner Folgendes umfasst:

Auswählen von Knoten, die als Ursprung einer Senkrechten geeignet sind, die zu einer Verbindung gezogen wird, die die ausgewählten Knoten benachbart oder nahe beieinander verbindet;
Auswählen eines Knotens, der geeignet ist, um die Breite zu berechnen, aus den ausgewählten Knoten, die als Ursprung der Senkrechten geeignet sind;
Berechnen eines Schnittpunkts zwischen der Verbindung und der Senkrechten; und
Berechnen einer Breite des Objekts basierend auf einer Positionsbeziehung zwischen dem Schnittpunkt und dem Knoten, der geeignet ist, um die Breite zu berechnen, oder einer Distanz der Senkrechten, die den Schnittpunkt und den Knoten verbindet, der geeignet ist, um die Breite zu berechnen.

6. Informationsverarbeitungsprogramm, das Anweisungen umfasst, die, wenn sie von einer Informationsverarbeitungsvorrichtung ausgeführt werden, die Vorrichtung veranlassen, das Verfahren nach Anspruch 5 auszuführen.

**Revendications**

1. Appareil de traitement d'informations comprenant :

une unité de traitement de données de terrain (11) configurée pour effectuer un processus de données de terrain consistant à calculer un groupe de coordonnées de terrain sur la base de données de terrain, où, dans les données de terrain, les positions et les formes des limites entre divers objets sont représentées par des noeuds, avec des liens optionnels connectant des noeuds adjacents exprimant la continuité de ces limites, et où le groupe de coordonnées de terrain reflète une portion d'un objet en termes d'une pluralité de noeuds qui sont descriptibles comme définissant une trajectoire unicursale ; et
une unité de traitement de sélection (12) configurée pour sélectionner des noeuds adjacents ou proches les uns des autres sur la trajectoire unicursale, et pour sélectionner un noeud approprié pour calculer une largeur de l'objet à partir d'autres noeuds sur la base d'une relation de position entre les noeuds sélectionnés et les autres noeuds,
où :

l'unité de traitement de sélection est en outre configurée pour sélectionner des noeuds appropriés comme origine d'une perpendiculaire tracée vers un lien connectant les noeuds sélectionnés adjacents ou proches les uns des autres et pour sélectionner un noeud approprié pour calculer la largeur à partir des noeuds sélectionnés appropriés comme origine de la perpendiculaire ; et
l'appareil de traitement d'informations est en outre configuré pour comprendre une unité de calcul de largeur qui calcule une intersection entre le lien et la perpendiculaire, et calcule une largeur de l'objet sur la base d'une relation de position entre l'intersection et le noeud appropriée pour calculer la largeur ou une distance de la perpendiculaire connectant l'intersection et le noeud approprié pour calculer la largeur.

2. Appareil de traitement d'informations selon la revendication 1,
où l'objet est au moins un objet parmi une route, un trottoir sur la route et une chaussée sur la route.

**3.** Appareil de traitement d'informations selon la revendication 1,
comprenant en outre une unité de commande de sortie de largeur qui est configurée pour émettre des informations indiquant la largeur calculée par l'unité de calcul de largeur vers l'extérieur.

**4.** Appareil de traitement d'informations selon la revendication 3,
où l'unité de commande de sortie de largeur est configurée pour émettre des informations indiquant un ou plusieurs des noeuds sélectionnés adjacents ou proches les uns des autres, les noeuds appropriés pour calculer la largeur et l'intersection, en plus des informations indiquant la largeur calculée par l'unité de calcul de largeur.

**5.** Procédé de traitement d'informations exécuté par un appareil de traitement d'informations, le procédé comprenant :

calculer un groupe de coordonnées de terrain sur la base de données de terrain où, dans les données de terrain, les positions et les formes des limites entre divers objets sont représentées par des noeuds, avec des liens optionnels connectant des noeuds adjacents exprimant la continuité de ces limites,
et où le groupe de coordonnées de terrain reflète une portion d'un objet en termes d'une pluralité de noeuds qui sont descriptibles comme définissant une trajectoire unicursale ;
sélectionner des noeuds adjacents ou proches les uns des autres sur la trajectoire unicursale,
et sélectionner un noeud approprié pour
calculer une largeur de l'objet à partir d'autres noeuds sur la base d'une relation de position entre les noeuds sélectionnés adjacents ou proches les uns des autres et les autres noeuds,
où le procédé comprend en outre :

sélectionner des noeuds appropriés comme origine d'une perpendiculaire tracée à un lien connectant les noeuds sélectionnés adjacents ou proches les uns des autres ;
sélectionner un noeud approprié pour calculer la largeur à partir des noeuds sélectionnés appropriés comme origine de la perpendiculaire ;
calculer une intersection entre le lien et la perpendiculaire ; et
calculer une largeur de l'objet sur la base d'une relation de position entre l'intersection et le noeud approprié pour calculer la largeur ou une distance de la perpendiculaire connectant l'intersection et le noeud approprié pour calculer la largeur.

**6.** Programme de traitement d'informations comprenant des instructions qui, lorsqu'elles sont exécutées par un appareil de traitement d'informations, amènent l'appareil à réaliser le procédé selon la revendication 5.

FIG. 1

Width calculation apparatus — 100

Storage unit — 20
- Terrain coordinate group storage unit — 21
- Width data storage unit — 22
- Map data storage unit — 23

Control unit — 10
- Terrain data processing unit — 11
- Width calculation unit — 12
- Width output control unit — 13

Input/output I/F — 30

(Terrain data)

(Display unit / External device)

```
              ┌──────────────┐
              │    Start     │
              └──────┬───────┘
                     │
       ┌─────────────────────────────┐
       │      Acquire terrain data   │── S11
       └─────────────┬───────────────┘
                     │
       ┌─────────────────────────────┐
       ║      Process terrain data   │── S12
       └─────────────┬───────────────┘
                     │
       ┌─────────────────────────────┐
       ║      Calculate width        │── S13
       └─────────────┬───────────────┘
                     │
       ┌─────────────────────────────┐
       ║      Control width output   │── S14
       └─────────────┬───────────────┘
                     │
       ┌─────────────────────────────┐
       │  Output width information to │── S15
       │   display unit/external device │
       └─────────────┬───────────────┘
                     │
              ┌──────────────┐
              │     End      │
              └──────────────┘
```

FIG. 2

```
              ┌──────────────────────────┐
              │  Terrain data processing │
              └────────────┬─────────────┘
                           │
       ┌──────────────────────────────────────┐
       │        Acquire terrain data          │── S12-1
       └──────────────────┬───────────────────┘
                          │
       ┌──────────────────────────────────────┐
       │           Extract layer              │── S12-2
       └──────────────────┬───────────────────┘
                          │
       ┌──────────────────────────────────────┐
       │     Divide terrain data into blocks  │── S12-3
       └──────────────────┬───────────────────┘
                          │
       ┌──────────────────────────────────────────┐
       │ Remove coordinates overlapping between blocks │── S12-4
       └──────────────────┬───────────────────────┘
                          │
       ┌──────────────────────────────────────────┐
       │ Store data in terrain coordinate group storage unit │── S12-5
       └──────────────────┬───────────────────────┘
                          │
              ┌──────────────────────────┐
              │          Return          │
              └──────────────────────────┘
```

FIG. 3

Width calculation

Acquire terrain coordinate group ──S13-1

Select block ──S13-2

Select two adjacent nodes in block ──S13-3

Select node suitable for calculation of width based on positional relationship between selected two nodes and other nodes ──S13-4

Calculate width ──S13-5

Store width data in width data storage unit ──S13-6

Return

F I G. 4

Width output control

Acquire width data ── S14-1

Acquire map data ── S14-2

Display width data on map ── S14-3

Return

# FIG. 5

200

210  220

223

230  221  222

# FIG. 6

FIG. 7

FIG. 8

F I G. 9

F I G. 10

FIG. 11

FIG. 12

24

F I G. 13

F I G. 14

F I G. 15

F I G. 16

F I G. 17

$(x_{s1}, y_{s1})$

$(x_{s8}, y_{s8})$

$(x_{s9}, y_{s9})$

$(x_{s2}, y_{s2})$

# F I G. 18

$(x_{r4}, y_{r4})$

$(x_{r5}, y_{r5})$

$(x_{r6}, y_{r6})$

$(x_{r7}, y_{r7})$

F I G. 19

$(x_{s11},y_{s11})$

$(x_{s12},y_{s12})$

$(x_{s21},y_{s21})$

$(x_{s24},y_{s24})$

$(x_{s15},y_{s15})$

$(x_{s22},y_{s22})$

$(x_{s23},y_{s23})$

$(x_{s14},y_{s14})$

$(x_{s13},y_{s13})$

F I G. 20

F I G. 21

31

F I G. 22

FIG. 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 108645342 A